# EUROPEAN PATENT SPECIFICATION

(11) **EP 0 903 976 B1**
(45) Date of publication and mention of the grant of the patent: **08.10.2003**
(21) Application number: 97924382.1
(22) Date of filing: 30.05.1997
(51) Int. Cl.: A01G 17/08

(54) **DEVICE FOR PRODUCING A RING**
EINRICHTUNG ZUR HERSTELLUNG EINES RINGES
DISPOSITIF DE PRODUCTION D'UNE BAGUE

(30) Priority: 30.05.1996 NL 1003237
(43) Date of publication of application: 31.03.1999
(73) Proprietor: Van Schie, Sebastianus Theodorus Cornelis, 2641 PX Pijnacker (NL)
(72) Inventor: Van Schie, Sebastianus Theodorus Cornelis, 2641 PX Pijnacker (NL)
(74) Representative: van Westenbrugge, Andries
(86) International application number: NL9700308
(87) International publication number: WO97044999

(56) References cited:
- EP-A- 0 763 323
- WO-A-84/03248
- FR-A- 2 701 739
- Advertising sheet 'Het "Dokex" Ringapparaat' (ROLLOOS-SÖRENSEN), available at 'Westland Promotion', Poeldijk (NL), 31 August 1971 XP002024429

## Description

The present invention relates to a device for producing a ring according to the preamble of claim 1

A device of this kind is known from the PCT application WO-A-84/03248. Devices of this kind are used, for example, for fastening stems of plants to supports such as wires and stakes. Particularly when cultivating in greenhouses, it is necessary to be able to affix large quantities of rings of this kind in a relatively short time at low cost. All manner of plastic clamps are known for the purpose of satisfying this requirement. However, the cost of these clamps is relatively high, and moreover there is an increasing obligation to collect the used rings for the purpose of returning the plastic out of environmental considerations.

In order to avoid this drawback, the above-mentioned PCT application WO-A-84/03248 has proposed a device which operates using wire. Such a wire may be steel wire which, after use, decays in an environmentally friendly manner owing to corrosion. The device in accordance with this PCT application comprises a handle with two parts which are displaced with respect to one another in a pumping motion. This pumping motion moves the wire out of the interior of the handle and fixes it around the stem/support in question. One of the handle parts is provided with a pair of wire cutters and in the region of the end of the pump stroke this pair of wire cutters is situated in the path of the wire and the wire can be cut by closing the jaws. The handle parts are then moved apart.

A major drawback of some embodiments of this device is that two hands are required for the pumping movement. It is then not possible at the same time to hold the plant and the support together in order to position correctly the ring produced in this way. According to this prior art application, this draw back can be obviated by providing a hook shaped extension to engage one of the articles to be connected.

Moreover, the user can only carry a limited quantity of wire, since this wire is arranged as a roll at the end of one of the handle parts. A large quantity of wire would be impractical and too heavy for the user.

Moreover, the use of a separate pair of wire cutters has proven laborious. Finally, the transportation of the wire during the turning to form a spiral ring is particularly troublesome and difficult.

The object of the present invention is to avoid these drawbacks.

This object is achieved with the device as described above having the characterising parts of claim 1.

The provision of motorized transport means result in the user no longer having to carry out a pumping motion to produce the ring. As a result, he can use one hand to hold the device and the other hand to hold the plant stem and/or support. One person can work particularly efficiently in this manner, and it is no longer necessary to have an assistant holding together the various parts.

In accordance with an advantageous embodiment of the invention, a store for wire is arranged in a holder which is connected to the handle part via a flexible line. That is to say, in contrast to the abovementioned PCT application WO-A-84/03248, the storage of wire is not situated at the end of the handle part but rather the end of the handle part is connected to a separate store via a flexible line. This separate store may contain a considerable quantity of wire. If the wire has a thickness of, for example, 1.0 mm, the storage may hold 10 to 15 kilos of such a wire, so that a very large number of rings can be produced. Naturally, the number of rings depends on the number of revolutions comprising each ring or spiral.

The above-described cutting means for severing wire as desired for the production of a ring preferably comprise a rotating blade. The rotating blade can be actuated via a drive. Actuation of this kind may be automatic, i.e. the user can set the actuation, for example by actuating a switch, so that the wire feed stops automatically and cutting is executed after a defined amount of wire has been fixed around a stem/support.

Actuation of the rotating cutting means may comprise any design known in the prior art, such as hydraulic and pneumatic designs. However, it is preferred to implement this actuation with the aid of a lever mechanism and a separate cable by means of magnetic force.

In order to reduce the friction of the wire when it is being turned relative to the handle or support plate, it is proposed to provide a number of ball-bearings, along which the wire moves during the turning. This makes it possible to arrange the drive for the wire at least partially in the storage container described above. As a result, the handle part can be of comparatively light and easy-to-handle design.

The invention will be explained in more detail below with reference to an exemplary embodiment depicted in the drawing, in which:
Fig. 1 diagrammatically shows a perspective view of the two parts of which the device according to the application is composed;
Fig. 2 shows a top view of a partially cut-away detail of the application part according to the invention;
Fig. 3 shows a side view of the device in accordance with Fig. 2 during a further step for affixing a ring; and
Fig. 4 shows the view in accordance with Fig. 3 at the moment when the ring is being cut.

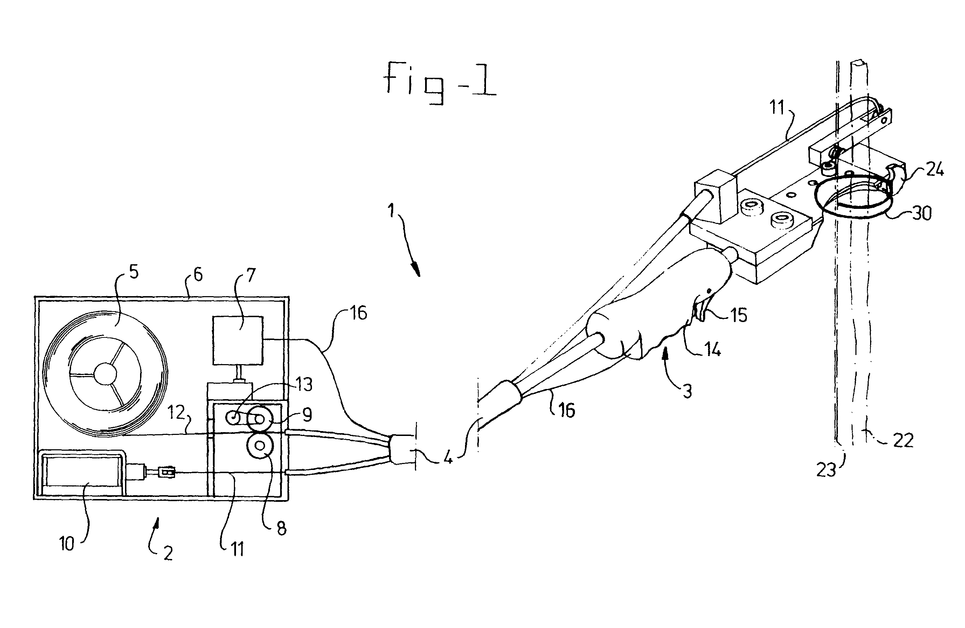

In Fig. 1, the device according to the invention is denoted overall by 1. It comprises a storage part 2 and an application part 3. These two parts are connected to one another via a flexible connection cable 4. A number of lines, which will be described in more detail further below, are inside this connection cable 4.

A reel 5 with wire 12 is arranged in stock part 2. This wire 12 moves between rollers 8 and 9, roller 8 being a pressure roller and roller 9 being driven by a motor 13. The movement of this motor 13 is effected by control 7. Control 7 is connected via cable 16 to switch 15 of the handle part 14 of the application part 3. By actuating switch 15 either as a pulse or as a continuous actuation, control 7 actuates motor 13 for a specific time. Naturally, it is also possible for the motor to operate continuously when switch 15 is actuated, so that an amount of wire 12 is transported as a function of the actuation of the said switch.

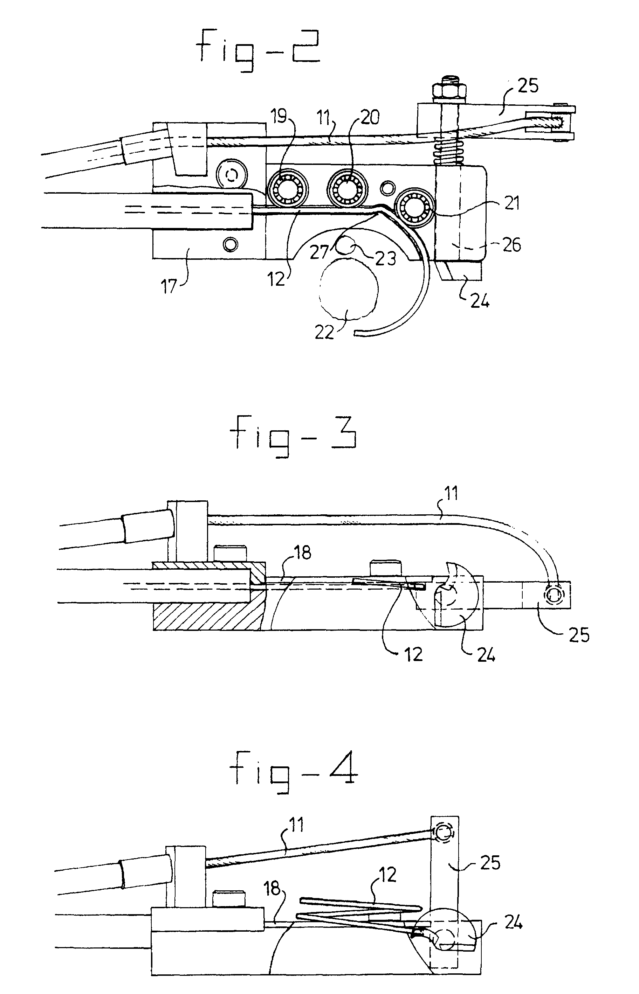

Control 7 likewise effects the operation of a linear magnet 10. The reciprocating motion of this magnet 10, which is arranged in holder 6, results in the reciprocating motion of a relatively taut cable 11. Like cable 16, this cable 11 is guided through connection cable 4 and emerges again at the application part 3, where it actuates a lever 25, as can be seen from Fig. 2. This lever 25 is connected via a pin 26 to a cutting blade 24. Magnet 10 can be actuated at specific defined and adjustable periods by means of control 7 or can be actuated automatically when switch -15 is released.

The application part comprises, in addition to the handle 14, a support plate 17 which is fixedly connected thereto. As depicted in Fig. 3, a closure plate 18 is arranged on support plate 17. This closure plate is omitted in Fig. 2 for the sake of clarity.

Ball-bearings 19, 20 and 21 are arranged in support plate 17 These ball-bearings are situated in the path of wire 12, which is supplied from store 5. Moreover, a protuberance 27 is arranged in the path of wire 12. As can be seen from Fig. 2, this protuberance interacts with ball-bearing 21 to effect turning of the wire. A further phase of operation is shown in Fig. 3. Cable 11 is not tensioned in either Fig. 2 or Fig. 3. However, in Fig. 4 it is tensioned, so that blade 24 is rotated and cuts through the spiral ring 30.

Ring 30 may comprise one or more turns, depending on the wishes of the user. Moreover, by adjusting the exit opening from the support plate 17, it is possible to regulate the distance between two successive winds of the ring.

It will be clear that the device according to the invention can be actuated using one hand. Since all the relatively heavy components of the device are situated in the remotely positioned box, the device is easy to handle.

Naturally, this box 6 may be provided with wheels or other means for displacement through a greenhouse, for example. It may be designed as a tubular truck. However, stationary applications are also conceivable.

The device according to the invention makes it possible to obtain a considerable saving compared to conventional clamps. Firstly, it is possible to fix a greater number of rings per hour than when clamping as in the prior art. Moreover, a drawback of machines which operate using magazines containing clamps is that the magazines are constantly becoming empty. A very great length of wire can be arranged in the store according to the invention.

As well as the rapid application, the material is much less expensive.

It can clearly be seen from the drawings that in particular the contents of the box exhibits a degree of similarity to the feed mechanism for welding wire in CO₂ welding devices. As a result, the costs can be kept particularly low and a particularly high reliability can be achieved.

However, it should be understood that other embodiments are conceivable. For example, it is possible to arrange the motor which drives the wire in the handle. If this variant is used, a motor of this kind can likewise be used to drive the cutting means. This is possible in particular because the transportation of the wire and the cutting thereof are steps which take place successively, that is to say the wire is not being transported during the cutting. By means of one-way connections and other designs which are immediately obvious to the person skilled in the art, it is possible, for example by allowing the motor to rotate in two directions, to use one direction for transporting the wire and the other direction for cutting. The above-described motor may be driven electrically but also by means of a fluid. By arranging a motor of this kind in the handle, the pressure is no longer exerted on the wire in the connection line between the supply from the roll and the handle, thus simplifying transportation. According to a further alternative, a buffer mechanism is situated in the region of the store of the wire, in order to convert the dispensing of wire in strands into a gradually rotating motion of the wire wound onto a roll.

Moreover, it should be understood that the above-described device may be provided with overload protections, failure reports and signals indicating that there is no more wire. These measures are obvious to the person skilled in the art after reading the above description and lie within the scope of the appended claims.

## Claims

1. Device (1) for producing a ring (30), for example for fastening a plant stem (22) to a support (23), comprising a transport mechanism for a wire (12), means for turning said wire comprising a curved path for said wire in order to obtain a ring and cutting means (25) for said wire, which cutting means are arranged on a handle part (14), **characterised in that** said handle part comprises a support plate (17) on which the means for turning said wire and the cutting means are arranged, wherein said means for turning said wire comprises a protuberance (27) arranged in said support plate (17) provided on one side of the curved path and a bearing means (21) provided on the other side of the path to effect turning of the wire, and wherein the transport mechanism comprises a rotating motor which via rollers (8, 9) drives the wire.

2. Device according to claim 1, a store (5) for wire being arranged in a holder (6) which is connected to the handle part via a flexible line (4).

3. Device according to one of the preceding claims, at least part of the transport mechanism being arranged in the said holder.

4. Device according to one of the preceding claims, the said cutting means comprising a rotating blade (25).

5. Device according to claim 4, the blade being arranged in a reciprocating manner.

6. Device according to claim 2, wherein the the actuating means (10) for the blade are arranged in the holder.

7. Device according to claim 6, wherein the actuating means execute a linear displacement.

8. Device according to one of the preceding claims, comprising at least two rolling bearings, which are arranged in the path of the wire (12).

## Patentansprüche

1. Vorrichtung (1) zur Herstellung eines Rings (30), z.B. zum Befestigen eines Pflanzenstängels (22) an einer Halterung (23), umfassend einen Transportmechanismus für einen Draht (12), eine Einrichtung zum Biegen des Drahts, die einen gekrümmten Pfad für den Draht, um einen Ring zu erhalten, umfasst, und Schneideinrichtungen (25) für den Draht, welche Schneideinrichtungen auf einem Griffteil (14) angeordnet sind, **dadurch gekennzeichnet, dass** das Griffteil eine Trägerplatte (17) umfasst, auf der die Einrichtung zum Biegen des Drahts und die Schneideinrichtungen angeordnet sind, wobei die Einrichtung zum Biegen des Drahts einen in der Trägerplatte (17) angeordneten vorstehenden Teil (27), der auf einer Seite des gekrümmten Pfads vorgesehen ist, und eine Lagereinrichtung (21), die auf der anderen Seite des Pfads vorgesehen ist, umfasst, um ein Biegen des Drahts zu bewerkstelligen, und wobei der Transportmechanismus einen Drehmotor umfasst, der den Draht über Rollen (8,9) treibt.

2. Vorrichtung nach Anspruch 1, wöbei ein Vorrat (5) für Draht in einem Halter (6) angeordnet ist, der mit dem Griffteil über eine flexible Leitung (4) verbunden ist.

3. Vorrichtung nach einem der vorangehenden Ansprüche, wobei mindestens ein Teil des Transportmechanismus in dem besagten Halter angeordnet ist.

4. Vorrichtung nach einem der vorangehenden Ansprüche, wobei die Schneideinrichtungen eine Drehklinge (25) umfassen.

5. Vorrichtung nach Anspruch 4, wobei die Klinge auf eine hin- und hergehende Weise angeordnet ist.

6. Vorrichtung nach Anspruch 2, bei der die Betätigungseinrichtungen (10) für die Klinge im Halter angeordnet sind.

7. Vorrichtung nach Anspruch 6, bei der die Betätigungseinrichtungen eine lineare Verlagerung durchführen.

8. Vorrichtung nach einem der vorangehenden Ansprüche, umfassend mindestens zwei Wälzlager, die im Pfad des Drahts (12) angeordnet sind.

## Revendications

1. Dispositif (1) pour la fabrication d'une bague (30), par exemple pour la fixation d'une tige de plante (22) sur un support (23), comportant un mécanisme de transport pour un fil (12), des moyens destinés à faire tourner ledit fil comportant un passage courbe pour ledit fil afin d'obtenir une bague et des moyens de coupe (25) pour ledit fil, lesquels moyens de coupe sont disposés sur une partie de poignée (14), **caractérisé en ce que** ladite partie de poignée comporte une plaque de support (17) sur laquelle les moyens destinés à faire tourner ledit fil et les moyens de coupe sont disposés, lesdits moyens destinés à faire tourner ledit fil comportant une protubérance (27) disposée dans ladite plaque de support (17) prévue sur un côté du passage courbe et des moyens de palier (21) prévus sur l'autre côté du passage afin d'effectuer la rotation du fil, et le mécanisme de transport comportant un moteur de rotation qui entraîne le fil par l'intermédiaire de galets (8, 9).

2. Dispositif selon la revendication 1, une réserve (5) pour le fil étant disposée dans un support (6) qui est relié à la partie de poignée par l'intermédiaire d'une ligne flexible (4).

3. Dispositif selon l'une des revendications précédentes, au moins une partie du mécanisme de transport étant disposée dans ledit support.

4. Dispositif selon l'une des revendications précédentes, lesdits moyens de coupe comportant une lame rotative (25).

5. Dispositif selon la revendication 4, la lame étant disposée d'une manière alternative.

6. Dispositif selon la revendication 2, dans lequel les moyens d'actionnement (10) pour la lame sont disposés dans le support.

7. Dispositif selon la revendication 6, dans lequel les moyens d'actionnement exécutent un déplacement linéaire.

8. Dispositif selon l'une des revendications précédentes, comportant au moins deux paliers à roulement, qui sont disposés dans le passage du fil (12).
